(19) Europäisches Patentamt
European Patent Office
Office européen des brevets

(11) Veröffentlichungsnummer: **0 147 364**
**A1**

# (12) EUROPÄISCHE PATENTANMELDUNG

(21) Anmeldenummer: **84810510.2**

(22) Anmeldetag: **22.10.84**

(51) Int. Cl.⁴: **B 01 D 53/34**
**C 01 B 17/05**

(30) Priorität: **26.10.83 CH 5794/83**

(43) Veröffentlichungstag der Anmeldung:
**03.07.85 Patentblatt 85/27**

(84) Benannte Vertragsstaaten:
**BE DE FR GB IT NL**

(71) Anmelder: **CIBA-GEIGY AG**
**Postfach**
**CH-4002 Basel(CH)**

(72) Erfinder: **Cedraschi, Pierpaolo**
**Leimgrubenweg 12**
**CH-4125 Riehen(CH)**

(72) Erfinder: **Haas, Pierre-André, Dr.**
**Stegmattenweg 30**
**CH-4105 Biel-Benken(CH)**

## (54) Verfahren zum Entfernen von Schwefelwasserstoff aus Gasen.

(57) Verfahren zum Entfernen von Schwefelwasserstoff aus Gasen mittels einer Oxidationswäsche unter gleichzeitiger Bildung von elementarem Schwefel durch Waschen des Gases mit einer Bicarbonat/Carbonat-Lösung, welche eine Chinon-, Naphthochinon- oder Anthrachinonverbindungen und eine Metallverbindung eines Metalls, das zumindest 2 Valenzstufen besitzt, enthält, wobei Schwefelwasserstoff oxidiert und elementarer Schwefel freigesetzt wird und die reduzierte Waschlösung im Kontakt mit freiem Sauerstoff oder mit einem sauerstoffhaltigen Gas oxidiert wird, dadurch gekennzeichnet, dass diese Oxidation in Gegenwart von gelöstem freiem Kohlendioxid oder einem Kohlendioxid-haltigen Gas durchgeführt wird.

Durch diese Arbeitsweise verhindert man weitgehend die Bildung von Nebenprodukten und den Verbrauch an "Stretford-Katalysatoren".

EP 0 147 364 A1

CIBA-GEIGY AG
Basel (Schweiz)

3-14628/=

# Verfahren zum Entfernen von Schwefelwasserstoff aus Gasen

Die vorliegende Erfindung betrifft ein verbessertes Verfahren zum Entfernen von Schwefelwasserstoff aus Gasen mittels einer Oxidationswäsche unter gleichzeitiger Bildung von elementarem Schwefel.

In jüngster Zeit hat sich insbesondere ein Oxidationswäscheverfahren unter dem Namen "Stretford-Prozess" zur Entschwefelung von Gasen durchgesetzt.
Dabei wird der im Gas enthaltene Schwefelwasserstoff durch die Waschlösung absorbiert. Die in der Lösung enthaltenen Chemikalien setzen den gelösten Schwefelwasserstoff zu festem elementarem Schwefel um. Die verbrauchten Chemikalien in der Waschlösung werden anschliessend im Oxideur mit Luft regeneriert. Gleichzeitig wird der elementare Schwefel flottiert. Diese Aufschwemmung lässt sich durch einen Ueberlauf leicht abtrennen und durch Filter oder Zentrifugen unter Rückgewinnung des Lösungsmittels zu einem Schwefelkuchen eindicken, aus dem sich durch Umschmelzen reiner Schwefel gewinnen lässt.

Das Charakteristikum der Stretford-Waschlösung ist es, der wässrigen Bicarbonat/Carbonat-Lösung eine oder mehrere Anthrachinondisulfonsäure(n) zuzugeben und ferner in Gegenwart einer Metallverbindung eines Metalls zu arbeiten, das zumindest zwei Valenzstufen besitzt, und falls notwendig mittels eines Chelatier- oder Sequestriermittels in Lösung gehalten wird. Durch die erwähnten Zusätze zur Absorptionslauge werden die Reaktionen beschleunigt. Auf diese Weise wird es möglich, die Volumina der Oxidations- und Reaktionstanks beträchtlich herabzusetzen.

Metallverbindungen eines Metalls, das zumindest zwei Valenzstufen besitzt sind Salze von Eisen, Kupfer, Mangan, Chrom, Nickel, Kobalt und Vanadium. Als besonders geeignet haben sich Vanadiumverbindungen, beispielsweise ein Ortho-, Meta- oder Pyrovanadat erwiesen. Derartige Vanadiumverbindungen sind z.B. im Artikel von T. Nicklin und B.H. Holland: "Removal of Hydrogen Sulphide from Coke Oven Gas by the Stretford Process", erschienen im Verlag Thomas Yates, Ltd, Rochdale anlässlich des European Symposium "Cleaning of Coke Oven Gas", Saarbrücken, 21. - 22. März, 1963; beschrieben worden. Andere Metallverbindungen sind in der US-PS 4,014,983 offenbart.

Als Katalysator wird gemäss dem Stretford-Prozess Anthrachinondisulfonsäure verwendet, die natürlich auch in Form ihrer Salze vorliegen kann. In jüngerer Zeit wurden N,N'-Disulfono-anthrachinon-2,6/2,7-disulfonamide beschrieben, welche sich gegenüber den herkömmlichen Stretford-Katalysatoren durch erhöhte Aktivität auszeichnen (s. z.B. US-PS 4,276,224).

Wie aus der US-PS 4,243,648 hervorgeht, ist der Stretford-Prozess ein geeignetes Verfahren, Schwefelwasserstoff aus Gasen zu entfernen. Es wird aber gleichzeitig darauf hingewiesen, dass die Durchführung dieser Gasreinigung nicht ganz ohne Probleme verläuft. Eines der Probleme ist der unerwünschte Verbrauch an Chemikalien. Dieser Verbrauch an Anthrachinondisulfonsäure oder deren Derivate und insbesondere an Metallverbindung (z.B. Vanadat) führt nicht nur zu erheblich erhöhten Betriebskosten, sondern erfordert auch eine häufige analytische Ueberprüfung der Waschlösung, will man nicht mit ständiger $H_2S$-Ueberladung arbeiten.

Bei einer solchen Ueberladung treten vermehrt Nebenreaktionen auf, welche z.T. auch durch Komponenten im Gas selbst induziert werden, z.B. durch Cyanwasserstoff oder durch Schwefeldioxid. Die gebildeten Nebenprodukte, z.B. Sulfate, Thiosulfate und Thiocyanate (Rhodanide) stören nicht nur den Gasreinigungsprozess in erheblichen Mass, sondern fördern auch die Korrosion der Anlage, führen zu Verkrustung, erhöhen eine unerwünschte Niederschlagsbildung und erhöhen den Verbrauch an "Stretford-Chemikalien". Ausserdem steigt die Konzentration der Nebenprodukte laufend an, was die periodische Ersetzung von Teilen der Waschlösung erfordert. Ferner ist es bekannt, dass die Hydrochinonform des Katalysators sich in Gegenwart von Luftsauerstoff und erhöhter Sulfidionenkonzentration durch Ringspaltung zersetzt, was zu einem weiteren Verlust an Katalysator führt.

In der DE-OS 3,219,825 wird vorgeschlagen, einen Mindestgehalt von $CO_3^{2-}$ -Ionen in der Waschlösung aufrecht zu erhalten. Dieses Verfahren soll zu einer Verringerung der Vanadiumverluste im Waschmittel führen. Es wurde nun ein Verfahren gefunden, welches mittels einer einfachen Prozessführung die geschilderten Nachteile weitgehend verhindert, und dank der Verhinderung der erwähnten Nebenreaktion eine auf lange Zeit konstante Konzentration an "Stretford-Chemikalien" sicherstellt. Dieses besteht darin, dass man die Begasung im Oxideur in Gegenwart von Kohlendioxid durchführt.

Die vorliegende Erfindung betrifft ein Verfahren zum Entfernen von Schwefelwasserstoff aus Gasen mittels einer Oxidationswäsche unter gleichzeitiger Bildung von elementarem Schwefel durch Waschen des Gases mit einer Bicarbonat/Carbonat-Lösung, welche Chinon-, Naphthochinon- oder Anthrachinonverbindungen und Metallverbindungen eines Metalls, das zumindest 2 Valenzstufen besitzt, enthält, wobei Schwefelwasserstoff oxidiert und elementarer Schwefel freigesetzt wird und die reduzierte Waschlösung in Kontakt mit Sauerstoff oder mit einem Sauerstoff-haltigem Gas oxidiert wird, dadurch gekennzeichnet, dass diese Oxidation in Gegenwart von gelöstem freiem Kohlendioxid oder einem Kohlendioxid-haltigen Gas durchgeführt wird.

Die Menge des verwendeten Kohlendioxids ist unkritisch. Da diese Menge von der Löslichkeit des Kohlendioxids in der Waschlauge im Oxideur abhängt, welche ihrerseits temperaturabhängig ist, lässt sich ein absoluter Wert kaum geben. Eine Menge von ca. 1 Vol.-% bezogen auf den zur Oxidation notwendigen Luft genügt jedoch in der Regel, um zu guten Resultaten zu kommen. Dabei ist es erstaunlich, dass bei solch kleinem Zusatz an Kohlendioxid über lange Zeit keine Vanadiumverluste feststellbar sind. Vorzugsweise verwendet man zur Oxidation ein Gas mit einem Gehalt von mehr als 0,05 Vol.% Kohlendioxid. Selbstverständlich schaden auch grössere Mengen an Kohlendioxid nicht, und es kann sich in der Praxis durchaus lohnen, grössere Mengen Kohlendioxid oder solches enthaltende Gase, z.B. 10 oder mehr Vol.-%, zuzumischen.

Als Anthrachinone eignen sich besonders solche der Formel I

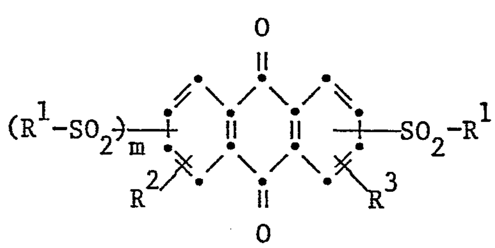

(I) ,

worin $R^1$ -OH oder $-N(R^4)-A-R^5$ ist, wobei $R^4$ Wasserstoff, ein wasserlöslich-machendes Kation oder geradkettiges oder verzweigtes $C_1$-$C_4$ Alkyl bedeutet, A $-(C_nH_{2n})-$, mit n als 1-4 bedeutet und $R^5$ eine Gruppe $-SO_3M$, $-CO_2M$, $-PO_3HM$ oder $-PO_3M_2$ ist, wobei M Wasserstoff oder ein wasserlöslich-machendes Kation ist, und $R^2$ und $R^3$ unabhängig voneinander Wasserstoff, Methyl oder -COOH sind und m 0 oder 1 ist.

Die bevorzugte Bedeutung von $R^1$ ist $-N(R^4)-A-R^5$.

Die Verbindungen der Formel I sind bekannt und beispielsweise in der US-PS 4,276,224 beschrieben. Die Einsatzmengen betragen ca. 50 bis 4000 ppm, vorzugsweise 100 - 400 ppm.

Die Metallverbindungen werden in Konzentrationen von etwa 1000 - 4000 ppm, bevorzugt 1500 - 2500 ppm eingesetzt.

Diese Konzentrationen können im erfindungsgemässen Verfahren eingehalten werden, obwohl aus den oben beschriebenen Schwierigkeiten, ein eindeutiger Trend zu erhöhten Metall- und Katalysatorkonzentrationen vorhanden ist.

Besonders gute Resultate erhält man, wenn der pH-Wert im Oxideur unterhalb etwa 8,5, bevorzugt zwischen pH 7,0 und 8,5 liegt.

Die Erfindung betrifft auch ein Verfahren, dadurch gekennzeichnet, dass die Waschlösung neben dem Antrachinon der Formel I eine Metallverbindung eines Metalls, welches zumindest zwei Valenzstufen besitzt enthält.

Als solche eignen sich besonders Salze von Eisen, Kupfer, Mangan, Chrom, Nickel, Kobalt oder Vanadium, besonders geeignet ist ein Ortho-, Meta- oder Pyrovanadat, z.B. ein Alkali- oder Ammoniumvanadat.

Ausserdem kann die Lösung falls erwünscht ein Chelatier- oder Sequestriermittel enthalten, wie z.B. Weinsäure, deren Salze und wasserlöslichen Ester, Citronensäure und deren wasserlösliche Ester, sowie Acetodiphosphonsäure.

Beispiel 1: Die Entschwefelungsanlage besteht aus einem Absorptionsturm, einem Reaktionstank und einem Oxidationstank. Der Schwefelwasserstoff wird im Absorptionsturm zu über 95% aus dem Gas entfernt und der absorbierte $H_2S$ zu über 99.5% in Schwefel überführt.

Die Waschlauge enthält

0.6 g/l IRGASULF® 700 (Anthrachinon-disulfonsäureamid)
4.3 g/l $NaVO_3 \cdot H_2O$
33 g/l $NaHCO_3$
20 g/l $Na_2S_2O_3$

und wird im Kreis geführt, wobei die Aufenthaltszeit im Reaktionstank und im Oxidationstank je 30 min. betragen. Die Temperatur der Waschlösung beträgt 20-25°C.

Die $H_2S$-Beladung beträgt 300 - 400 ppm. Der zur Rückoxidation der Waschlösung benötigten Luft wird Kohlensäure zugesetzt, so dass der pH-Wert im Oxidationstank bei pH $\cong$ 8.5 gehalten wird. Ueber eine Betriebsdauer von 2500 h werden keine Vanadiumverluste beobachtet.

Beispiel 2:
Die Entschwefelungsanlage besteht aus einem Absorptionsturm und einem Oxidationstank. Der Schwefelwasserstoff wird im Absorptionsturm zu über 99% aus dem Gas entfernt und der absorbierte Schwefelwasserstoff zu über 99.5% in Schwefel überführt.

Die Waschläuge enthält

0.4 g/l IRGASULF® 700
9.6 g/l $NaVO_3 \cdot H_2O$
60 g/l $NaHCO_3$
10 g/l $Na_2CO_3$
2.9 g/l NaCl

und wird im Kreis geführt, wobei die Reaktionszeit 30 min beträgt. Die Temperatur im Absorptionsturm beträgt 40-42°C im Oxidationstank 36-38°C.

Die $H_2S$-Beladung beträgt 400 - 500 ppm. Der zur Rückoxidation der Waschlösung benötigten Luft wird Kohlensäure zugesetzt, so dass der pH-Wert im Oxidationstank bei pH $\cong$ 8.5 gehalten wird. Ueber eine Betriebsdauer von 2000 h werden keine Vanadiumsverluste beobachtet.

Patentansprüche

1. Verfahren zum Entfernen von Schwefelwasserstoff aus Gasen mittels einer Oxidationswäsche unter gleichzeitiger Bildung von elementarem Schwefel durch Waschen des Gases mit einer Bicarbonat/Carbonat-Lösung, welche Chinon-, Naphthochinon- oder Anthrachinonverbindungen und eine Metallverbindung eines Metalls, das zumindest 2 Valenzstufen besitzt, enthält, wobei Schwefelwasserstoff oxidiert und elementarer Schwefel freigesetzt wird und die reduzierte Waschlösung im Kontakt mit freiem Sauerstoff oder mit einem Sauerstoff-haltigen Gas oxidiert wird, dadurch gekennzeichnet, dass diese Oxidation in Gegenwart von gelöstem freiem Kohlendioxid oder einem Kohlendioxid-haltigen Gas durchgeführt wird.

2. Verfahren gemäss Anspruch 1, dadurch gekennzeichnet, dass als Anthrachinon eines der Formel I

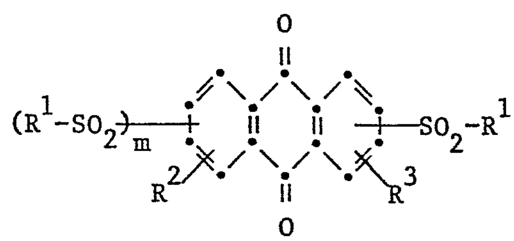

(I) ,

verwendet wird, worin $R^1$ -OH oder $-N(R^4)-A-R^5$ ist, wobei $R^4$ Wasserstoff, ein wasserlöslich-machendes Kation oder geradkettiges oder verzweigtes $C_1-C_4$ Alkyl bedeutet, A $-(C_nH_{2n})-$, mit n als 1 - 4 bedeutet und $R^5$ eine Gruppe $-SO_3M$, $-CO_2M$, $-PO_3HM$ oder $-PO_3M_2$ ist, wobei M Wasserstoff oder ein wasserlöslich-machendes Kation ist, und $R^2$ und $R^3$ unabhängig voneinander Wasserstoff, Methyl oder -COOH sind und m 0 oder 1 ist.

3. Verfahren gemäss Anspruch 2, dadurch gekennzeichnet, dass in der Formel I $R^1$ $-N(R^4)-A-R^5$ ist.

4. Verfahren gemäss Anspruch 1, dadurch gekennzeichnet, dass die Waschlösung ein Salz von Eisen, Kupfer, Mangan, Chrom, Nickel, Kobalt oder Vanadium enthält.

5. Verfahren gemäss Anspruch 4, dadurch gekennzeichnet, dass die Waschlösung ein Ortho-, Meta- oder Pyro-vanadat enthält.

6. Verfahren gemäss Anspruch 1, dadurch gekennzeichnet, dass etwa 1 Vol.-% Kohlendioxid bezogen auf die zur Oxidation notwendigen Luft zugemischt werden.

7. Verfahren gemäss Anspruch 1, dadurch gekennzeichnet, dass der pH-Wert der Waschlösung im Oxideur den Wert von 8,5 nicht überschreitet.

Europäisches Patentamt

# EUROPÄISCHER RECHERCHENBERICHT

0147364

Nummer der Anmeldung

EP 84 81 0510

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | US-A-4 243 648 (D.M. FENTON)<br>* Ansprüche 1, 6-8, 10, 14, 15; Spalte 7, Zeilen 50-61 *<br>--- | 1,4,5,7 | B 01 D 53/34<br>C 01 B 17/05 |
| A,D | US-A-4 276 224 (D.R. RANDELL et al.)<br>* Anspruch 1; Spalte 4, Zeilen 33-39 *<br>--- | 1-3 | |
| A | EP-A-0 008 640 (CIBA-GEIGY AG.)<br>* Ansprüche 1, 10; Seite 4; Zeilen 4-13 *<br>--- | 1-3 | |
| A,D | DE-A-3 219 825 (LINDE AG.)<br>* Vollständiges Dokument *<br>----- | | RECHERCHIERTE SACHGEBIETE (Int. Cl.4)<br>B 01 D 53/00<br>C 01 B 17/00 |

Der vorliegende Recherchenbericht wurde für alle Patentansprüche erstellt.

| Recherchenort | Abschlußdatum der Recherche | Prüfer |
|---|---|---|
| BERLIN | 04-02-1985 | BERTRAM H E H |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument